# DEMANDE DE BREVET EUROPEEN

(11) **EP 4 484 185 A1**
(43) Date de publication de la demande: **01.01.2025**
(21) Numéro de dépôt: 24184188.1
(22) Date de dépôt: 25.06.2024
(51) Int. Cl.: B60H 1/34, F24F 13/14

(54) **AÉRATEUR COMPRENANT UN DISPOSITIF DE COMMANDE SÉCURISÉ**

(30) Priorité: 27.06.2023 FR 2306699
(71) Demandeur: Faurecia Intérieur Industrie, 92000 Nanterre (FR)
(72) Inventeur: BUI, Thanh Tu, 95310 SAINT-OUEN-L'AUMÔNE (FR); BLEKER, Julien, 95400 VILLIERS LE BEL (FR); AUSSIETRE, Julien, 60000 BEAUVAIS (FR)
(74) Mandataire: Lavoix

(57) **Abrégé**

Aérateur (10) comportant un conduit (12) d'aération, une première (14) et une deuxième (16) ailettes pivotables par rapport audit conduit (12) et un dispositif (18) de commande d'une position angulaire des ailettes (14, 16), le dispositif (18) de commande comprend un organe (32) de préhension, mobile en translation par rapport à la première ailette (14), et une transmission (34) reliant l'organe (32) de préhension à la deuxième ailette (16), la transmission (34) comprend un organe (40) de liaison et un dispositif (42) d'articulation, matérialisant un axe (52) de rotation de l'organe (40) de liaison par rapport à l'organe (32) de préhension, le dispositif (42) d'articulation comprend une tige (60) et un crochet (62), la tige (60) étant emboîtée élastiquement dans le crochet (62), la tige (60) formant une saillie de part et d'autre du crochet (62) selon l'axe (52).

## Description

La présente invention se rapporte à un aérateur du type comportant : un conduit d'aération s'étendant selon une direction principale ; une première et une deuxième ailettes s'étendant en travers dudit conduit d'aération ; chacune des première et deuxième ailettes étant apte à pivoter par rapport au conduit d'aération, respectivement autour d'un premier et d'un deuxième axes, inclinés d'un angle non nul par rapport à la direction principale ; et un dispositif de commande d'une position angulaire des première et deuxième ailettes ; le dispositif de commande comprenant : un organe de préhension, mobile en translation par rapport à la première ailette le long du premier axe ; et un mécanisme de transmission reliant l'organe de préhension à la deuxième ailette, de sorte qu'une translation de l'organe de préhension par rapport à la première ailette le long du premier axe conduise à un pivotement de la deuxième ailette autour du deuxième axe ; le mécanisme de transmission comprenant un organe de liaison et un premier et un deuxième dispositifs d'articulation ; lesdits premier et deuxième dispositifs d'articulation matérialisant un troisième axe de rotation de l'organe de liaison par rapport à l'organe de préhension.

L'invention s'applique particulièrement aux aérateurs destinés à équiper un habitacle de véhicule, notamment de véhicule automobile. Un tel aérateur est notamment décrit dans le document CN217259505.

Cependant, le mécanisme de transmission reliant l'organe de préhension à la deuxième ailette subit des efforts relativement importants lors de son fonctionnement. Certaines pièces sont donc susceptibles de se déformer et de se désolidariser les unes des autres, notamment lorsqu'elles sont réalisées dans des matériaux déformables. Le mécanisme devient alors inutilisable.

La présente invention a pour but de proposer un aérateur comprenant un dispositif de commande sécurisé, apte à résister aux efforts subis lors de son fonctionnement et/ou de son transport.

A cet effet, l'invention a pour objet un aérateur du type précité, dans lequel le premier dispositif d'articulation comprend : une première tige portée par l'un de l'organe de liaison et de l'organe de préhension, ladite première tige s'étendant selon le troisième axe ; et un premier crochet porté par l'autre de l'organe de liaison et de l'organe de préhension, la première tige étant emboîtée élastiquement dans ledit premier crochet, la première tige formant une saillie de part et d'autre du premier crochet selon le troisième axe.

Suivant d'autres aspects avantageux de l'invention, l'aérateur comporte l'une ou plusieurs des caractéristiques suivantes, prises isolément ou suivant toutes les combinaisons techniquement possibles :
- la première tige et le premier crochet sont portés respectivement par l'organe de liaison et par l'organe de préhension ;
- une extrémité de la première tige, opposée à l'organe de liaison, porte une première butée bloquant l'organe de liaison en translation selon le troisième axe par rapport à l'organe de préhension ;
- le deuxième dispositif d'articulation comprend : une deuxième tige portée par l'un de l'organe de liaison et de l'organe de préhension, ladite deuxième tige s'étendant selon le troisième axe ; et un support porté par l'autre de l'organe de liaison et de l'organe de préhension, ledit support comprenant un orifice au contour fermé, la deuxième tige étant insérée dans ledit orifice de sorte à former une saillie de part et d'autre du support selon le troisième axe ;
- le deuxième dispositif d'articulation comprend : une deuxième tige portée par l'un de l'organe de liaison et de l'organe de préhension, ladite deuxième tige s'étendant selon le troisième axe ; et un deuxième crochet porté par l'autre de l'organe de liaison et de l'organe de préhension, ledit deuxième crochet étant emboîté élastiquement autour de la deuxième tige, de sorte que la deuxième tige forme une saillie de part et d'autre du deuxième crochet selon le troisième axe ;
- le troisième axe est sensiblement parallèle au premier axe ;
- le mécanisme de transmission comporte en outre : une fente portée par l'un de l'organe de liaison et de la deuxième ailette ; et un barreau porté par l'autre de l'organe de liaison et de la deuxième ailette ; le barreau étant apte à coulisser dans la fente et à pivoter par rapport à la fente au cours d'une translation de l'organe de préhension par rapport à la première ailette ;
- la fente et le barreau sont portés respectivement par l'organe de liaison et par la deuxième ailette.

L'invention se rapporte en outre à un procédé de montage d'un aérateur tel que décrit ci-dessus, ledit procédé comprenant une étape d'emboîtement de la première tige dans le premier crochet, par déformation élastique dudit premier crochet, de sorte que la première tige forme une saillie de part et d'autre du premier crochet selon le troisième axe.

Selon un mode de réalisation, l'étape d'emboîtement de la première tige dans le premier crochet comprend un mouvement de l'organe de liaison par rapport à l'organe de préhension, ledit mouvement étant choisi parmi : un pivotement autour du deuxième dispositif d'articulation ; un pivotement autour d'un axe de symétrie des premier et deuxième dispositifs d'articulation ; et une translation de l'organe de liaison perpendiculairement au troisième axe.

L'invention se rapporte en outre à un véhicule comprenant un aérateur tel que décrit ci-dessus.

L'invention apparaîtra plus clairement à la lecture de la description qui va suivre, donnée uniquement à titre d'exemple non limitatif, et faite en référence aux dessins dans lesquels :
- la figure 1 est une vue en coupe d'un aérateur selon un premier mode de réalisation de l'invention ;
- la figure 2 est une vue en coupe de l'aérateur de la figure 1 ;
- la figure 3 est une vue de détail de l'aérateur des figure 1 et 2 ; et
- la figure 4 est une vue de détail, en coupe, d'un aérateur selon un deuxième mode de réalisation de l'invention.

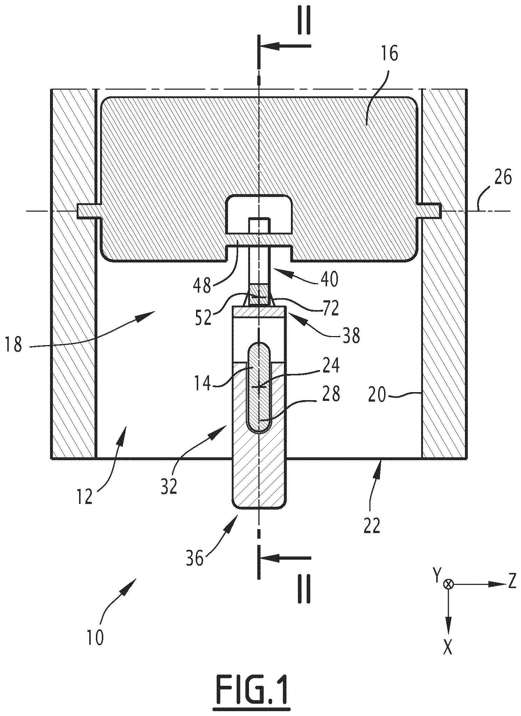

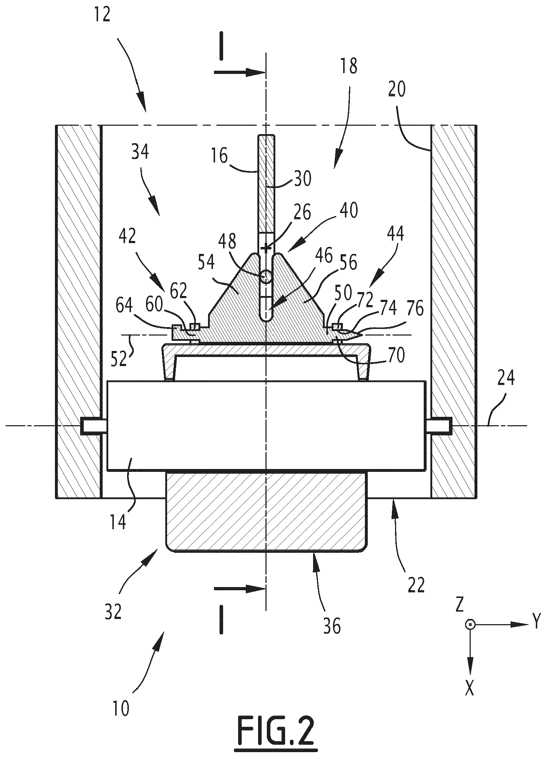

Les figures 1 et 2 représentent un aérateur 10 selon un premier mode de réalisation de l'invention. Dans le mode de réalisation représenté, l'aérateur 10 est installé dans un habitacle de véhicule (non représenté), de préférence dans un habitacle de véhicule automobile.

L'aérateur 10 comporte notamment : un conduit 12 d'aération ; une première 14 et une deuxième 16 ailettes ; et un dispositif 18 de commande.

Le conduit 12 d'aération est disposé en sortie d'un dispositif (non représenté) de l'habitacle de véhicule.

Dans la suite de la description, on considère une base orthonormée (X, Y, Z) associée au conduit 12 d'aération.

Le conduit 12 s'étend selon une direction principale X. Plus précisément, le conduit 12 est défini par une paroi interne 20, de forme sensiblement cylindrique par exemple de base rectangulaire, s'étendant selon la direction principale X. Une extrémité 22 du conduit 12 ouvre sur l'habitacle du véhicule.

La première 14 et la deuxième 16 ailettes s'étendent en travers du conduit 12 d'aération. Plus précisément, chacune des première 14 et deuxième 16 ailettes s'étend entre deux extrémités, chaque extrémité étant articulée à la paroi interne 20 du conduit 12.

Chacune des première 14 et deuxième 16 ailettes est apte à pivoter par rapport au conduit 12 d'aération, respectivement autour d'un premier 24 et autour d'un deuxième 26 axes. Chacun des premier 24 et deuxième 26 axes est inclinés d'un angle non nul par rapport à la direction principale X du conduit 12. De préférence, chacun des premier 24 et deuxième 26 axes est sensiblement perpendiculaire à la direction principale X.

De préférence, les premier 24 et deuxième 26 axes sont sensiblement perpendiculaires l'un à l'autre. Dans le mode de réalisation représenté, les premier 24 et deuxième 26 axes sont parallèles respectivement à la direction Y et à la direction Z.

Dans le mode de réalisation représenté, la première ailette 14 est disposée entre la deuxième ailette 16 et l'extrémité 22 du conduit 12, selon la direction principale X.

Chacune des première 14 et deuxième 16 ailettes est destinée à orienter un flux d'air circulant dans le conduit 12 jusqu'à l'extrémité 22. A cet effet, chacune des première 14 et deuxième 16 ailettes présente une forme sensiblement plane, parallèle à l'axe 24, 26 de pivotement de ladite ailette.

On considère une position angulaire de chacune des première 14 et deuxième 16 ailettes, correspondant à un angle formé par un plan médian 28, 30 de ladite ailette avec la direction principale X. Sur les figures 1 et 2, l'aérateur 10 est dans une configuration dite initiale, dans laquelle chaque plan médian 28, 30 est parallèle à la direction principale X.

Le dispositif 18 de commande est destiné à permettre à un utilisateur de modifier la position angulaire de la première 14 et/ou de la deuxième 16 ailettes.

Le dispositif 18 de commande comprend un organe 32 de préhension et un mécanisme 34 de transmission.

L'organe 32 de préhension est mobile en translation par rapport à la première ailette 14, le long du premier axe 24. Par exemple, l'organe 32 de préhension est monté coulissant sur la première ailette 14.

L'organe de préhension 32 comporte un premier 36 et un deuxième 38 bords opposés. Le premier bord 36 de l'organe 32 de préhension est apte à être manipulé par un utilisateur du véhicule. De préférence, le premier bord 36 de l'organe 32 de préhension est disposé en saillie selon la direction principale X, par rapport à l'extrémité 22 du conduit 12. Le deuxième bord 38 de l'organe 32 de préhension est disposé à l'intérieur du conduit 12.

Dans le mode de réalisation représenté, l'organe de préhension 32 est réalisé par l'assemblage de plusieurs pièces. En variante non représenté, l'organe de préhension est monobloc.

Le mécanisme 34 de transmission relie l'organe 32 de préhension à la deuxième ailette 16, comme détaillé ci-après.

Le mécanisme 34 de transmission comprend un organe 40 de liaison et un premier 42 et un deuxième 44 dispositifs d'articulation. Dans le mode de réalisation représenté, le mécanisme 34 de transmission comprend en outre une fente 46 et un barreau 48.

La fente 46 est portée par l'un de l'organe 40 de liaison et de la deuxième ailette 16 ; et le barreau 48 est porté par l'autre de l'organe 40 de liaison et de la deuxième ailette 16. Dans le mode de réalisation représenté, la fente 46 et le barreau 48 sont portés respectivement par l'organe 40 de liaison et par la deuxième ailette 16.

Dans le mode de réalisation représenté, l'organe 40 de liaison comporte : une base 50 s'étendant longitudinalement selon un troisième axe 52 ; et un premier 54 et un deuxième 56 ailerons, s'étendant latéralement par rapport à la base 50. Les premier 54 et deuxième 56 ailerons sont alignés le long du troisième axe 52. Un espace entre lesdits premier 54 et deuxième 56 ailerons matérialise la fente 46, qui s'étend sensiblement linéairement, perpendiculairement au troisième axe 52.

Le premier 42 et le deuxième 44 dispositifs d'articulation sont disposés de part et d'autre de la base 50 selon le troisième axe 52.

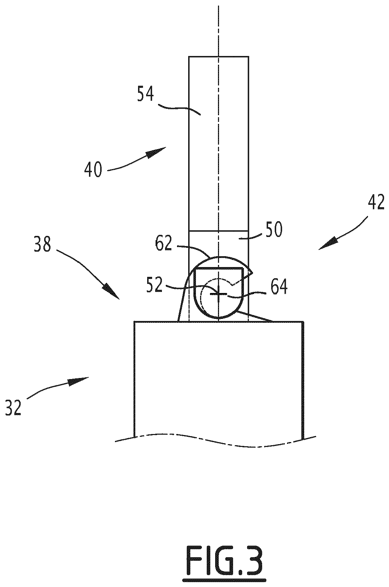

Le premier dispositif d'articulation 42 comprend une première tige 60 et un premier crochet 62, également visibles sur la figure 3. La première tige 60 s'étend selon le troisième axe 52 et est portée par l'un de l'organe 40 de liaison et de l'organe 32 de préhension. Le premier crochet 62 est porté par l'autre de l'organe 40 de liaison et de l'organe 32 de préhension.

De préférence le premier crochet 62 présente une forme générale en C, avec une ouverture disposée entre deux branches. A l'état non déformé, une largeur de l'ouverture du premier crochet 62 est inférieure au diamètre de la première tige 60.

La première tige 60 est emboîtée dans le premier crochet 62, formant une première liaison articulée, comme précisé ci-après. Par ailleurs, la première tige 60 forme une saillie de part et d'autre du premier crochet 62 selon le troisième axe 52.

Dans le mode de réalisation représenté, la première tige 60 est portée par la base 50 de l'organe 40 de liaison ; et le premier crochet 62 est porté par le deuxième bord 38 de l'organe 32 de préhension. Plus précisément, dans le mode de réalisation représenté, une première et une seconde extrémités de la première tige 60 sont fixées respectivement à la base 50 de l'organe 40 de liaison et à une première butée 64. La première butée 64 est en saillie radiale par rapport à la première tige 60. La base 50 et la première butée 64 bloquent ainsi la première tige 60 en translation selon le troisième axe 52 par rapport au premier crochet 62.

Dans le premier mode de réalisation des figures 1 et 2, le deuxième dispositif d'articulation 44 comprend une deuxième tige 70 et un support 72. La deuxième tige 70 s'étend selon le troisième axe 52 et est portée par l'un de l'organe 40 de liaison et de l'organe 32 de préhension. Le support 72 est porté par l'autre de l'organe 40 de liaison et de l'organe 32 de préhension.

Le support 72 comprend un orifice 74 au contour fermé. La deuxième tige 70 est insérée dans ledit orifice 74, ladite deuxième tige et le support 72 formant une deuxième liaison articulée.

Grâce aux liaisons articulées formées par le premier 42 et le deuxième 44 dispositifs d'articulation, l'organe 40 de liaison est apte à pivoter par rapport à l'organe 32 de préhension autour du troisième axe 52. Dans le mode de réalisation représenté, le troisième axe 52 est sensiblement parallèle au premier axe 24, soit parallèle à la direction Y.

Par ailleurs, la deuxième tige 70 forme une saillie de part et d'autre du support 72 selon le troisième axe 52.

Dans le mode de réalisation représenté, la deuxième tige 70 est portée par la base 50 de l'organe 40 de liaison ; et le support 72 est porté par le deuxième bord 38 de l'organe 32 de préhension. Plus précisément, dans le mode de réalisation représenté, une première extrémité de la deuxième tige 70 est fixée à la base 50 de l'organe 40 de liaison ; et une deuxième extrémité de ladite deuxième tige 70 forme une pointe 76.

En variante non représentée, la pointe 76 présente un épaulement par rapport à la deuxième tige 70. Ledit épaulement sert de butée empêchant le retrait de la deuxième tige 70 de l'orifice 74. A cette fin la pointe 76 est déformable élastiquement lors de l'insertion dans l'orifice 74.

Le barreau 48 s'étend sensiblement linéairement, parallèlement au deuxième axe 26. Le barreau 48 est disposé dans la fente 46, en saillie de part et d'autre de l'organe 40 de liaison. Plus précisément, le barreau 48 est au contact de chacun des premier 54 et deuxième 56 ailerons matérialisant la fente 46.

Comme décrit ci-après, le barreau 48 est apte à coulisser le long de la fente 46 et à pivoter par rapport à ladite fente, en réaction à des mouvements de l'organe 40 de liaison par rapport au conduit 12.

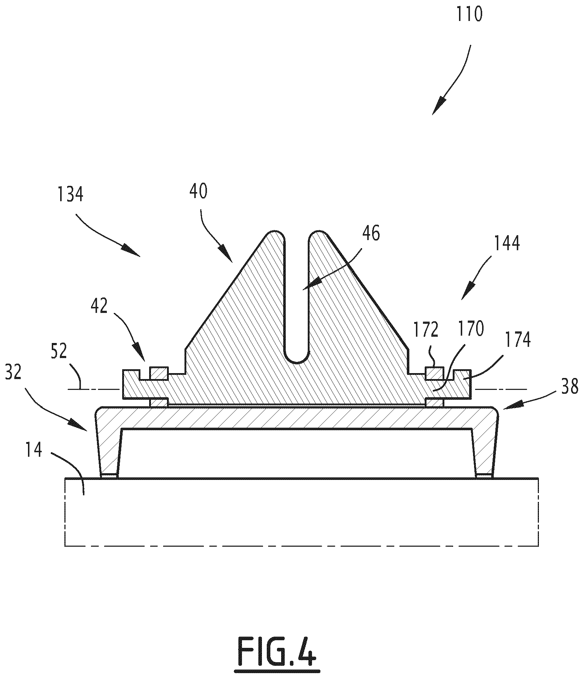

La figure 4 montre une vue de détail d'un aérateur 110 selon un deuxième mode de réalisation de l'invention.

L'aérateur 110 est conforme à la description ci-dessus de l'aérateur 10, à l'exception du mécanisme de transmission reliant l'organe 32 de préhension à la deuxième ailette (non représentée).

Plus précisément, l'aérateur 110 comprend un mécanisme 134 de transmission, ledit mécanisme comprenant notamment : un organe 40 de liaison et un premier 42 et un deuxième 144 dispositifs d'articulation ; et une fente 46. L'organe 40 de liaison, le premier dispositif 42 d'articulation et la fente 46 sont similaires à ceux de l'aérateur 10 des figures 1 et 2, précédemment décrits. Le mécanisme 134 de transmission comporte en outre un barreau (non représenté) analogue au barreau 48 précédemment décrit et apte à coopérer avec la fente 46.

Dans le deuxième mode de réalisation de la figure 4, le deuxième dispositif d'articulation 144 comprend une deuxième tige 170 et un deuxième crochet 172.

La deuxième tige 170 s'étend selon le troisième axe 52 et est portée par l'un de l'organe 40 de liaison et de l'organe 32 de préhension. Le deuxième crochet 172 est porté par l'autre de l'organe 40 de liaison et de l'organe 32 de préhension.

De préférence le deuxième crochet 172 présente une forme similaire à celle du premier crochet 62, soit une forme générale en C avec une ouverture disposée entre deux branches. A l'état non déformé, une largeur de l'ouverture du deuxième crochet 172 est inférieure au diamètre de la deuxième tige 170.

La deuxième tige 170 est emboîtée dans le deuxième crochet 172, formant une liaison articulée. Grâce aux liaisons articulées formées par les premier 42 et le deuxième 144 dispositifs d'articulation, l'organe 40 de liaison est apte à pivoter par rapport à l'organe 32 de préhension autour du troisième axe 52.

Par ailleurs, la deuxième tige 170 forme une saillie de part et d'autre du deuxième crochet 172 selon le troisième axe 52.

Dans le deuxième mode de réalisation de la figure 4, la deuxième tige 170 est portée par la base 50 de l'organe 40 de liaison ; et le deuxième crochet 172 est porté par le deuxième bord 38 de l'organe 32 de préhension. Plus précisément, dans le mode de réalisation de la figure 4, une première et une seconde extrémités de la deuxième tige 170 sont fixées respectivement à la base 50 de l'organe 40 de liaison et à une deuxième butée 174. La deuxième butée 174 est en saillie radiale par rapport à la deuxième tige 170. La base 50 et la deuxième crochet 172 bloquent ainsi la deuxième tige 170 en translation selon le troisième axe 52 par rapport au deuxième crochet 172.

Selon une première variante du deuxième mode de réalisation de la figure 4, le premier 62 et le deuxième 172 crochets sont symétriques l'un de l'autre par rapport à un plan perpendiculaire au troisième axe 52. De préférence, les ouvertures des premier 62 et deuxième 172 crochets sont orientés dans un même sens selon la direction Z.

Selon une deuxième variante du deuxième mode de réalisation de la figure 4, le premier 62 et le deuxième 172 crochets sont symétriques l'un de l'autre par rapport à un axe de symétrie perpendiculaire au troisième axe 52 et parallèle à X. De préférence, les ouvertures des premier 62 et deuxième 172 crochets sont orientés en sens opposés selon la direction Z.

De préférence, dans les modes de réalisation des figures 1-3 et 4, l'organe 40 de liaison, les première 60 et deuxième 70, 170 tiges et la première butée 64 sont réalisés de manière monobloc, préférentiellement à partir d'un matériau plastique. Plus préférentiellement, ledit matériau plastique est un plastique souple de type élastomère thermoplastique TPE elastomère polyester thermoplastique (TPC-ET), caoutchouc notamment éthylène-propylène-diène monomère EPDM. Dans le deuxième mode de réalisation de la figure 4, la deuxième butée 174 est en outre formée d'une pièce avec la deuxième tige 170.

Un procédé de montage du mécanisme 34 de transmission des figures 1 à 3 va maintenant être décrit. Tout d'abord, la pointe 76 de la deuxième tige 70 est insérée dans l'orifice 74 du support 72 porté par l'organe 32 de préhension, la base 50 de l'organe 40 de liaison étant alors inclinée par rapport au premier axe 24.

Puis, l'organe 40 de liaison est pivoté autour de l'orifice 74 jusqu'à assembler par clipsage la première tige 60 avec le premier crochet 62. L'insertion de la première tige 60 dans le premier crochet 62 se fait par la déformation élastique d'au moins une des branches du « C » formant ledit premier crochet, et/ou par compression élastique de la première tige.

Le troisième axe 52 de pivotement de l'organe 40 de liaison par rapport à l'organe 32 de préhension est ainsi matérialisé.

La forme différente des premier 42 et deuxième 44 dispositifs d'articulation matérialise un détrompeur permettant à un opérateur d'assembler correctement l'organe 40 de liaison et l'organe 32 de préhension.

Un procédé de montage du mécanisme 134 de transmission de la figure 4 va maintenant être décrit. L'organe 40 de liaison est approché de l'organe 32 de préhension et les première 60 et deuxième 170 tiges sont assemblées par clipsage, respectivement aux premier 62 et deuxième 172 crochets, sensiblement simultanément.

Selon la première variante, dans laquelle les ouvertures des crochets sont orientés dans le même sens, l'organe 40 de liaison est approché de l'organe 32 de préhension en maintenant la base 50 sensiblement parallèle au premier axe, jusqu'au clipsage des tiges 60, 170 avec les crochets 62, 172 correspondants.

Selon la deuxième variante, dans laquelle les ouvertures des crochets sont orientés en sens opposés, l'organe 40 de liaison est disposé entre les crochets 62, 172 et pivoté autour de l'axe de symétrie desdits crochets, jusqu'au clipsage des tiges 60, 170 avec les crochets 62, 172 correspondants.

La forme des première 60 et deuxième 70, 170 tiges, en saillie de part et d'autre du crochet 62, 172 ou du support 72 correspondant, permet à l'opérateur de vérifier visuellement que le montage du mécanisme 34, 134 de transmission a été correctement effectué.

Un procédé de fonctionnement de l'aérateur 10, 110 ci-dessus va maintenant être décrit.

Au cours du fonctionnement dudit aérateur 10, 110, un flux d'air circule dans le conduit 12 jusqu'à l'extrémité 22, de sorte à ventiler l'habitacle de véhicule incluant ledit aérateur. On considère que l'aérateur est dans la configuration initiale visible sur les figures 1 et 2.

Un utilisateur, souhaitant modifier la direction du flux d'air dans un plan (X, Z), saisit le premier bord 36 de l'organe 32 de préhension pour faire pivoter la première ailette 14 autour du premier axe 24. La position angulaire de ladite première ailette 14 est ainsi modifiée, influant sur l'orientation du flux d'air.

Au cours de la rotation de la première ailette 14 et de l'organe 32 de préhension autour du premier axe 24, la fente 46 portée par l'organe 40 de liaison se déplace dans un plan (X, Z) incluant le barreau 48 dans la configuration initiale. Ledit barreau 48 n'est donc pas déplacé et le deuxième ailette 16 demeure parallèle à la direction principale X.

La rotation de la première ailette 14 conduit éventuellement l'organe 40 de liaison à pivoter autour du troisième axe 52, en cas de contact avec la deuxième ailette 16 aux extrémités du barreau 48. Un tel pivotement confère une meilleure flexibilité au mécanisme 34, 134 de transmission.

A partir de la configuration initiale de l'aérateur 10, 110, on considère à présent un utilisateur souhaitant modifier la direction du flux d'air dans un plan (X, Y). L'utilisateur saisit le premier bord 36 de l'organe 32 de préhension pour faire coulisser ledit organe 32 par rapport à la première ailette 14 le long du premier axe 24. La fente 46 portée par l'organe 40 de liaison se déplace dans un plan (X, Y), entraînant le barreau 48, ce qui conduit à une rotation de la deuxième ailette 16 autour du deuxième axe 26. La position angulaire de ladite deuxième ailette 16 est ainsi modifiée, influant sur l'orientation du flux d'air.

L'utilisateur peut ainsi modifier à sa convenance la position angulaire de chacune des première 14 et deuxième 16 ailettes, indépendamment l'une de l'autre.

Lors du déplacement de l'organe 32 de préhension le long du premier axe, une force de réaction est exercée par le barreau 48 sur l'organe 40 de liaison. Le matériau dudit organe 40 étant préférentiellement souple, des déformations dudit matériau pourraient conduire à un désengagement des éléments des premier 42 et deuxième 44, 144 dispositifs d'articulation, comme il a été observé dans l'art antérieur.

De plus, lors du transport de l'aérateur 10, 110, par exemple à destination de son site d'assemblage, des déformations de l'organe 40 de liaison pourraient également conduire à un désengagement des éléments des premier 42 et deuxième 44, 144 dispositifs d'articulation.

Un tel risque de désengagement est évité par la forme des première 60 et deuxième 70, 170 tiges, en saillie de part et d'autre du crochet 62, 172 ou du support 72 correspondant. Une telle forme procure en effet une surface de contact suffisante entre lesdits éléments, notamment par le fait que les tiges traversent de part en part leur logement. En outre, la présence de la ou des butées 64, 174 évite à l'organe 40 de liaison de se déplacer axialement par rapport à l'organe 32 de préhension, ce qui pourrait favoriser le désengagement.

Un aérateur 10, 110 tel que décrit ci-dessus présente donc une transmission sécurisée du mouvement entre l'organe 32 de préhension et les ailettes 14, 16.

## Revendications

1. Aérateur (10, 110) comprenant :
- un conduit (12) d'aération s'étendant selon une direction principale (X) ;
- une première (14) et une deuxième (16) ailettes s'étendant en travers dudit conduit d'aération ; chacune des première et deuxième ailettes étant apte à pivoter par rapport au conduit d'aération, respectivement autour d'un premier (24) et d'un deuxième (26) axes, inclinés d'un angle non nul par rapport à la direction principale ; et
- un dispositif (18) de commande d'une position angulaire des première et deuxième ailettes ;
le dispositif de commande comprenant :
- un organe (32) de préhension, mobile en translation par rapport à la première ailette (14) le long du premier axe (24) ; et
- un mécanisme (34, 134) de transmission reliant l'organe de préhension à la deuxième ailette, de sorte qu'une translation de l'organe de préhension par rapport à la première ailette le long du premier axe conduise à un pivotement de la deuxième ailette (16) autour du deuxième axe (26) ;
le mécanisme de transmission comprenant un organe (40) de liaison et un premier (42) et un deuxième (44, 144) dispositifs d'articulation ; lesdits premier et deuxième dispositifs d'articulation matérialisant un troisième axe (52) de rotation de l'organe (40) de liaison par rapport à l'organe (32) de préhension ;
l'aérateur étant **caractérisé en ce que** le premier dispositif (42) d'articulation comprend : une première tige (60) portée par l'un de l'organe (40) de liaison et de l'organe (32) de préhension, ladite première tige s'étendant selon le troisième axe (52) ; et un premier crochet (62) porté par l'autre de l'organe de liaison et de l'organe de préhension, la première tige étant emboîtée élastiquement dans ledit premier crochet, la première tige formant une saillie de part et d'autre du premier crochet selon le troisième axe.

2. Aérateur selon la revendication 1, dans lequel la première tige (60) et le premier crochet (62) sont portés respectivement par l'organe (40) de liaison et par l'organe (32) de préhension.

3. Aérateur (10) selon la revendication 2, dans lequel une extrémité de la première tige (60), opposée à l'organe (40) de liaison, porte une première butée (64) bloquant l'organe de liaison en translation selon le troisième axe (52) par rapport à l'organe (32) de préhension.

4. Aérateur (10) selon l'une des revendications 1 à 3, dans lequel le deuxième dispositif d'articulation comprend : une deuxième tige (70) portée par l'un (40) de l'organe de liaison et de l'organe de préhension, ladite deuxième tige s'étendant selon le troisième axe (52) ; et un support (72) porté par l'autre (32) de l'organe de liaison et de l'organe de préhension, ledit support comprenant un orifice (74) au contour fermé, la deuxième tige étant insérée dans ledit orifice de sorte à former une saillie de part et d'autre du support selon le troisième axe.

5. Aérateur (110) selon l'une des revendications 1 à 3, dans lequel le deuxième dispositif d'articulation comprend : une deuxième tige (170) portée par l'un (40) de l'organe de liaison et de l'organe de préhension, ladite deuxième tige s'étendant selon le troisième axe ; et un deuxième crochet (172) porté par l'autre (32) de l'organe de liaison et de l'organe de préhension, la deuxième tige étant emboîtée élastiquement dans le deuxième crochet, la deuxième tige formant une saillie de part et d'autre du deuxième crochet selon le troisième axe.

6. Aérateur selon l'une des revendications précédentes, dans lequel le troisième axe (52) est sensiblement parallèle au premier axe (24).

7. Aérateur selon l'une des revendications précédentes, dans lequel le mécanisme (34, 134) de transmission comporte en outre : une fente (46) portée par l'un de l'organe (40) de liaison et de la deuxième ailette (16) ; et un barreau (48) porté par l'autre de l'organe de liaison et de la deuxième ailette ; le barreau étant apte à coulisser dans la fente et à pivoter par rapport à la fente au cours d'une translation de l'organe (32) de préhension par rapport à la première ailette (14).

8. Aérateur selon la revendication 7, dans lequel la fente (46) et le barreau (48) sont portés respectivement par l'organe (40) de liaison et par la deuxième ailette (16).

9. Procédé de montage d'un aérateur selon l'une des revendications précédentes, ledit aérateur comprenant :
- un conduit (12) d'aération s'étendant selon une direction principale (X) ;
- une première (14) et une deuxième (16) ailettes s'étendant en travers dudit conduit d'aération ; chacune des première et deuxième ailettes étant apte à pivoter par rapport au conduit d'aération, respectivement autour d'un premier (24) et d'un deuxième (26) axes, inclinés d'un angle non nul par rapport à la direction principale ; et
- un dispositif (18) de commande d'une position angulaire des première et deuxième ailettes ;
le dispositif de commande comprenant :
- un organe (32) de préhension, mobile en translation par rapport à la première ailette (14) le long du premier axe (24) ; et
- un mécanisme (34, 134) de transmission reliant l'organe de préhension à la deuxième ailette, de sorte qu'une translation de l'organe de préhension par rapport à la première ailette le long du premier axe conduise à un pivotement de la deuxième ailette (16) autour du deuxième axe (26) ;
le mécanisme de transmission comprenant un organe (40) de liaison et un premier (42) et un deuxième (44, 144) dispositifs d'articulation ; lesdits premier et deuxième dispositifs d'articulation matérialisant un troisième axe (52) de rotation de l'organe (40) de liaison par rapport à l'organe (32) de préhension ; le premier dispositif (42) d'articulation comprend : une première tige (60) portée par l'un de l'organe (40) de liaison et de l'organe (32) de préhension, ladite première tige s'étendant selon le troisième axe (52) ; et un premier crochet (62) porté par l'autre de l'organe de liaison et de l'organe de préhension ;
le procédé de montage comprenant une étape d'emboîtement de la première tige (60) dans le premier crochet (62), par déformation élastique dudit premier crochet, de sorte que la première tige forme une saillie de part et d'autre du premier crochet selon le troisième axe.

10. Procédé de montage d'un aérateur selon la revendication 9, dans lequel l'étape d'emboîtement de la première tige (60) dans le premier crochet (62) comprend un mouvement de l'organe (40) de liaison par rapport à l'organe de préhension, ledit mouvement étant choisi parmi : un pivotement autour du deuxième dispositif (44) d'articulation ; un pivotement autour d'un axe de symétrie des premier (42) et deuxième (144) dispositifs d'articulation ; et une translation de l'organe (40) de liaison perpendiculairement au troisième axe (52).
